Europäisches Patentamt

European Patent Office

Office européen des brevets

(11) Veröffentlichungsnummer: **0 241 843**

**A2**

(12) **EUROPÄISCHE PATENTANMELDUNG**

(21) Anmeldenummer: 87105098.5

(22) Anmeldetag: 07.04.87

(51) Int. Cl.⁴: **B29B 7/24**

(30) Priorität: 14.04.86 DE 3612447

(43) Veröffentlichungstag der Anmeldung:
21.10.87 Patentblatt 87/43

(84) Benannte Vertragsstaaten:
BE CH FR GB IT LI NL SE

(71) Anmelder: **Krauss-Maffei Aktiengesellschaft**
**Krauss-Maffei-Strasse 2**
**D-8000 München 50(DE)**

(72) Erfinder: **Bauer, Adolf, (grad.)**
**Heideweg 24b**
**D-8037 Olching(DE)**
Erfinder: **Söchtig, Wolfgang, Dipl.-Ing.**
**Finkenstrasse 1**
**D-8034 Germering(DE)**

(54) **Anlage zur Hochdruckmischung von zwei oder mehreren reaktiven Kunststoffkomponenten.**

(57) Bei einer Anlage zur Herstellung von Schaumkunststoffen aus reaktiven Kunststoffkomponenten mit mehreren, zyklisch betriebenen Mischköpfen, welche über Abzweigleitungen mit zentralen Vorlauf- und Rücklaufleitungen verbunden sind, wird zur Erkennung von Leckageströmen durch die jeweils geschlossenen Steuerventile der Abzweigleitungen vorgeschlagen, unmittelbar hinter jedem Steuerventil ein weiteres Steuerventil anzuordnen. Das zwischen jeweils zwei hintereinander angeordneten, abgesperrten Steuerventilen gebildete Kontrollvolumen wird auf Druckveränderungen nach oben und nach unten überwacht, wobei eine Druckerhöhung ein undichtes vorderes Steuerventil und eine Druckverringerung ein undichtes hinteres Steuerventil erkennen läßt. Durch diese frühzeitige Leckageerkennung während der Schaumkunststoffherstellung lassen sich Mischungs-und damit Produktfehler infolge solcher Leckagen vermeiden.

EP 0 241 843 A2

# ANLAGE ZUR HOCHDRUCKMISCHUNG VON ZWEI ODER MEHREREN REAKTIVEN KUNSTSTOFFKOMPO-NENTEN

Die Erfindung bezieht sich auf eine Anlage gemäß dem Oberbegriff des Patentanspruchs. Eine derartige Anlage ist allgemein bekannt.

Bei Anlagen zur Schaumstoffherstellung, z.B. Polyurethanschaum, mit mehreren, sequentiell betriebenen Mischköpfen werden die gegebenenfalls mit Schwerspat, Glas oder anderen Zuschlagstoffen versehenen reaktiven Kunststoffkomponenten, z.B. Polyol und Isocyanat, in zentralen Leitungen den Mischköpfen zugeführt und von den Mischköpfen rückgeführt, wobei jeder Mischkopf über entsprechende Abzweigleitungen mit den zentralen Vor-und Rücklaufleitungen verbunden ist. In jeder Abzweig-Vorlaufleitung ist ein Steuerventil angeordnet, wobei diese Steuerventile entsprechend dem Spritzzyklus der Mischköpfe so gesteuert werden, daß die Abzweig-Vorlaufleitung des momentan betriebenen Mischkopfes geöffnet ist und die Abzweig-Verlaufleitungen aller übrigen, momentan stillgesetzten Mischköpfe geschlossen sind. Bei einer Leckage eines der geschlossenen Steuerventile fließen geringe Mengen der betreffenden Komponente durch das leckende Steuerventil zu dem betreffenden stillgesetzten Mischkopf. Da sich jeder stillgesetzte Mischkopf in der Rezirkulationsstellung befindet, fließt der zuströmende Leckstrom über den Rezirkulationsweg des stillgesetzten Mischkopfes in dessen Abzweig-Rücklaufleitung und von dort in die zentrale Rücklaufleitung, wodurch das Verhältnis Vorlaufmenge zu Rücklaufmenge bzw. die Dosierung des momentan betriebenen Mischkopfes verändert wird. Die Folge einer solchen Leckage ist ein Mischungsfehler, welcher zu einem entsprechend fehlerhaften Schaumstofferzeugnis führt. Diese Leckagefehler lassen sich wegen der hohen Vorlaufdrucke von z.B. 200 bar selbst bei hochqualitativen Steuerventilen nicht immer vermeiden, so daß seit langem ein Bedarf nach Erkennung solcher Leckagefehler besteht. Bisher hat man sich damit beholfen, die Schaumstofferzeugnisse probenweise zu testen, was jedoch zu einer teuren Ausschußproduktion führen kann, wenn ein Mischungsfehler relativ spät festgestellt wird.

Die **Aufgabe** der Erfindung besteht demgegenüber darin, bei einer Anlage der eingangs erwähnten Art eine Überwachung auf Leckageströme während der laufenden Herstellung zu ermöglichen, ohne jedoch die Anlage vom Aufbau oder vom Betrieb her zu komplizieren.

Diese Aufgabe wird erfindungsgemäß durch die kennzeichnenden Merkmale des Patentanspruchs gelöst.

Die Erfindung beruht auf der Überlegung, durch Anordnung eines weiteren Steuerventils hinter jedem bereits vorhandenen Steuerventil ein bei Absperrung beider Ventile wirksames Kontrollvolumen zu schaffen, dessen Druck bei fehlender Leckage beider Ventile konstant bleibt. Bei einer Leckage des vorderen Steuerventils fließt ein Leckstrom in das Kontrollvolumen ein, so daß sich dessen Druck erhöht. Bei einer Leckage des hinteren Steuerventils fließt ein Leckstrom aus dem Kontrollvolumen ab, so daß sich dessen Druck verringert. Durch Überwachung des Drucks in dem Kontrollvolumen auf Konstanz, z.B. mittels eines an das Kontrollvolumen angeschlossenen Manometers, läßt sich auf einfache, mühelose Weise feststellen, ob und gegebenenfalls welches der Steuerventile undicht ist, so daß sich bereits während der Schaumstoffherstellung eine Veränderung des Mischungsverhältnisses verzögerungsfrei feststellen läßt.

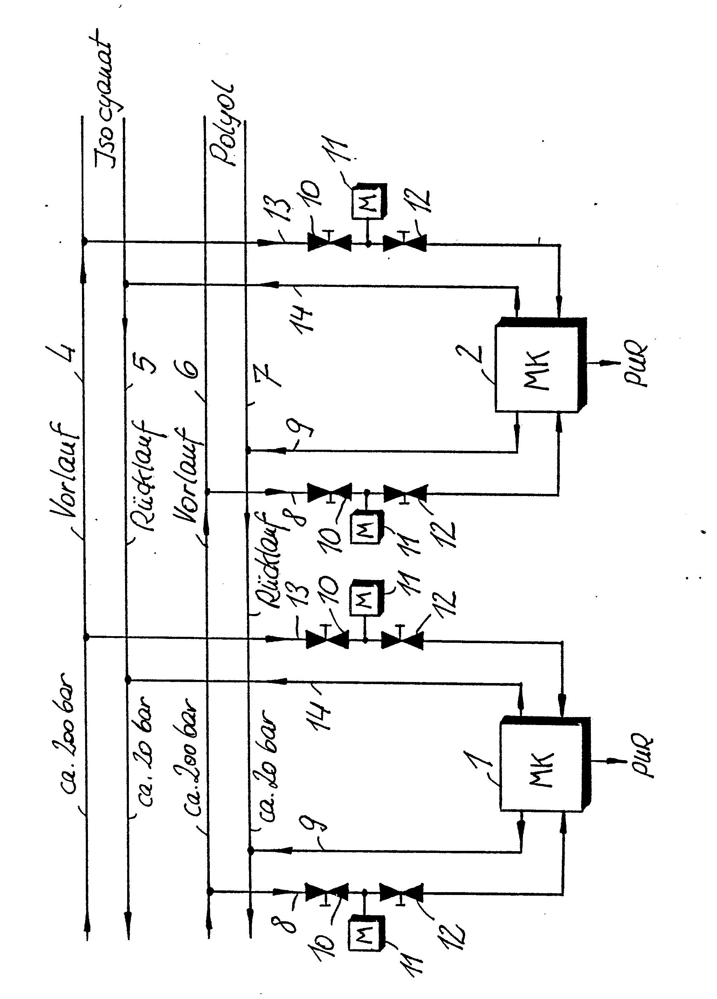

Die Erfindung wird anhand der Zeichnung näher erläutert, welche ein Strömungsschaltbild der erfindungsgemäßen Anlage zeigt.

In der Figur sind mit 1 und 2 zwei Mischköpfe angedeutet, wobei die Anzahl der Mischköpfe auch größer sein kann. Die Bauart der Mischköpfe ist gleichgültig, da unabhängig von der Bauart und der Anzahl der Mischköpfe eine parallele Zuführung und Rückführung der zu mischenden reaktiven Kunststoffkomponenten erfolgt. Im gezeigten Ausführungsbeispiel für die Herstellung von Polyurethanschaum ("PUR") ist für die benötigten Komponenten Isocyanat und Polyol jeweils eine zentrale Vorlaufleitung 4 bzw. 6 und eine zentrale Rücklaufleitung 5 bzw. 7 vorgesehen. Die sequentiell betriebenen Mischköpfe 1, 2 sind über Abzweigleitungen 8,9 und 13, 14 mit den zentralen Vor-und Rücklaufleitungen 6, 7 bzw. 4, 5 für Polyol und Isocyanat verbunden. Die Druckangaben von ca. 200 bar für den Vorlaufdruck und ca. 20 bar für den Rücklaufdruck sind nur beispielsweise gewählt, um das Leckageproblem zu veranschaulichen.

In jeder Abzweig-Vorlaufleitung 8 und 13 für Polyol bzw. Isocyanat ist in bekannter Weise ein Steuerventil 10 angeordnet, welches elektrisch oder hydraulisch fernbetätigbar ist. Mit Hilfe dieser Steuerventile wird der Arbeitszyklus der Mischköpfe 1, 2 gesteuert, und zwar derart, daß die dem betriebenen Mischkopf zugeordneten Steuerventile geöffnet und die dem stillgesetzten Mischkopf zugeordneten Steuerventile geschlossen sind. Bei einer Undichtigkeit eines der geschlossenen Steuerventile ändert sich, wie eingangs dargelegt wurde, das Mischungsverhältnis Polyol zu Isocyanat des momentan betriebenenMischkopfes, was zu den erwähnten Fehlern der hergestellten PUR-Schaumerzeugnisse führt.

Erfindungsgemäß ist unmittelbar hinter jedem Steuerventil 10 ein weiteres Steuerventil 12 in Serie angeordnet, wobei das Volumen zwischen beiden Steuerventilen 10 und 12 möglichst klein sein soll, um eine hohe Meßgenauigkeit zu erzielen. Bei abgesperrten Ventilen 10, 12 ist das dazwischen eingeschlossene Volumen der betreffenden Komponente konstant, so daß auch der Druck dieses Kontrollvolumens konstant ist.

Leckt das vordere Steuerventil 10, so fließt ein Leckstrom in das Kontrollvolumen, so daß sich dessen Druck erhöht. Leckt dagegen das hintere Steuerventil 12, so fließt ein Leckstrom aus dem Kontrollvolumen ab, so daß sich dessen Druck verringert. Der Druck jedes Kontrollvolumens wird mit Hilfe eines angeschlossenen Manometers 11 gemessen, so daß Abweichungen des Kontrollvolumendrucks nach oben oder nach unten leicht festgestellt werden können. Da für jedes Steuerventil ein Kontrollvolumen geschaffen wird, läßt sich überdies exakt feststellen, welches Kontrollvolumen bzw. welches Steuerventil undicht ist.

Anstelle einer visuellen Überwachung des Drucks in jedem Kontrollvolumen läßt sich natürlich auch eine automatische Überwachung mittels eines Drucksensors und eines nachgeschalteten Vergleichers durchführen, welcher bei einer Über-oder Unterschreitung eines vorgewählten Referenzdruckes eine Alarmanzeige und ggfs. einen Abschaltbefehl für die gesamte Anlage auslöst. In jedem Falle läßt sich mit Hilfe der Erfindung eine Leckagefeststellung während der laufenden PUR-Schaumherstellung erzielen, so daß eine Ausschußproduktion vermeidbar ist. Dies gilt sowohl für die Herstellung von Schaumkunststoffen aus reaktiven Komponenten ohne Zuschlagstoffe wie z.B. Schwerspat, Glas oder dgl., als auch für eine solche Herstellung aus reaktiven Komponenten, welche mit derartigen Zuschlagstoffen versetzt sind. Das Auftreten von Undichtigkeiten der Steuerventile wird natürlich durch die Verwendung von Zuschlagstoffen begünstigt, so daß der Vorteil der Erfindung besonders bei der Verarbeitung von Zuschlagstoffen zum Tragen kommt.

## Ansprüche

Anlage zur Hochdruckmischung von zwei oder mehreren, gegebenenfalls mit Zuschlagstoffen versehenen reaktiven Kunststoffkomponenten, mit
-zumindest zwei sequentiell betreibbaren Mischköpfen,
-einer für alle Mischköpfe gemeinsamen Vorlaufleitung und einer für alle Mischköpfe gemeinsamen Rücklaufleitung für jede Kunststoffkomponente,
-einer Abzweig-Vorlaufleitung und einer Abzweig-Rücklaufleitung je Mischkopf für jede Kunststoffkomponente,
wobei zumindest in den Abzweig-Vorlaufleitungen jeweils ein Steuerventil angeordnet ist und die Steuerventile derart steuerbar sind, daß die Abzweig-Vorlaufleitung des momentan betriebenen Mischkopfes geöffnet ist und die Abzweig-Vorlaufleitungen aller übrigen, momentan stillgesetzten Mischköpfe geschlossen sind,
**dadurch gekennzeichnet,** daß zur Erkennung von Leckageströmen durch geschlossene Steuerventile (10, 12) unmittelbar hinter jedem Steuerventil (10) ein weiteres Steuerventil (12) angeordnet ist und daß der Vorlaufdruck in jedem abgesperrten Volumenraum zwischen jeweils zwei hintereinander angeordneten, geschlossenen Steuerventilen (10, 12) auf Konstanz überwacht wird.

ca. 200 bar          Vorlauf          4

Isocyanat

ca. 20 bar          Rücklauf          5

ca. 200 bar          Vorlauf          6

Polyol

ca. 20 bar          Rücklauf          7

Krauss-Maffei AG
8000 München 50
TK 263 a

0 241 843